**Europäisches Patentamt**

**European Patent Office**

**Office européen des brevets**

(19)

(11) Veröffentlichungsnummer : **0 158 088**
**B1**

(12)

# EUROPÄISCHE PATENTSCHRIFT

(45) Veröffentlichungstag der Patentschrift :
**25.05.88**

(51) Int. Cl.⁴ : **B 25 B 27/24**, B 23 P 21/00

(21) Anmeldenummer : **85102144.4**

(22) Anmeldetag : **27.02.85**

(54) **Montagegerät zum Einsetzen von geteilten Ventilkeilen.**

(30) Priorität : 28.03.84 DE 3411441

(43) Veröffentlichungstag der Anmeldung :
**16.10.85 Patentblatt 85/42**

(45) Bekanntmachung des Hinweises auf die Patenterteilung : 25.05.88 Patentblatt 88/21

(84) Benannte Vertragsstaaten :
**AT DE FR GB IT SE**

(56) Entgegenhaltungen :
DE-A- 3 247 589
GB-A- 1 450 788
GB-A- 2 053 035
US-A- 4 381 601
US-A- 4 458 412

(73) Patentinhaber : Johann A. Krause Maschinenfabrik
GmbH
Betonstrasse 31
D-2820 Bremen-Farge (DE)

(72) Erfinder : Krause, Johann A.
Betonstrasse 31
D-2820 Bremen 71 (DE)

(74) Vertreter : Bolte, Erich, Dipl.-Ing. et al
c/o Meissner, Bolte & Partner Patentanwälte Hollerallee 73
D-2800 Bremen 1 (DE)

**Beschreibung**

Die Erfindung bezieht sich auf ein Montagegerät zum Einsetzen von geteilten, insbesondere zweigeteilten Ventilkeilen in einen Federteller von Ventilen gemäß dem Oberbegriff des Anspruchs 1.

Aus der DE-A 1-32 47 589 ist bereits ein derartiges Montagegerät bekannt, welches über ein Werkzeug zum Ansetzen der Ventilkeile an einen Ventilschaft mit darauf angeordnetem, federbelasteten Ventilteller verfügt. Das Werkzeug besteht aus einem Druckelement, das zum Zusammendrücken der Ventilfeder beim Ansetzen der Ventilkeile abwärtsbewegbar ist. Dem Druckelement sind zwei Magazine für jeweils eine Ventilkeilhälfte zugeordnet, die in einen gemeinsamen im Inneren des Druckelements angeordneten Transportkanal münden. In dem Transportkanal sind axial verschiebliche Druckstangen angeordnet, die die Ventilkeile vom Magazinausgang in eine tieferliegende Montagelage führen, in der nach dem Herunterfahren des Werkzeugs und dem Herunterdrücken des Ventiltellers gegen die Kraft der Ventilfeder das Ansetzen der beiden Ventilkeile an den Ventilschaft erfolgt.

Weiterhin ist dem DE-U-7 245 256 ein zum gleichen Zweck dienendes Montagegerät bekannt, welches ein die Ventilkeile bzw. Ventilkeilhälften übereinanderliegend aufnehmendes, am unteren Ende öffenbares und schließbares Magazin besitzt. Das Magazin ist rohrförmig ausgebildet und mit einem mittigen Zentrierstück versehen, das zwei in einer Ebene einander gegenüberliegende Ventilkeilhälften in Kammern zentriert aufnimmt. Das Öffnen und Schließen des Magazins erfolgt durch Zangenarme, welche gleichzeitig als Andruckorgane zum Ansetzen der Ventilkeile an den Ventilschaft dienen. Zum Montieren der Ventilkeile wird das rohrförmige Magazin auf den Ventilschaft aufgesetzt, wobei der Ventilteller gegen die Ventilfeder abgesenkt wird. Sodann werden die Zangenarme geöffnet, so daß die Ventilkeilhälften nach unten gleiten, wobei die Zangenarme als Führung dienen.

Die beiden vorstehend genannten Montagegeräte haben mehrere Nachteile. Zum einen müssen diese bei jedem Montagevorgang einschließlich des Magazins bzw. der Magazine bewegt werden, was eine automatische Magazinbefüllung praktisch unmöglich macht. Zum anderen kommt es in der Praxis durchaus vor, daß einzelne Ventilkeile im Magazin klemmen oder beim Herausgleiten aus demselben verkanten, so daß entweder kein Ventilkeil oder ein verkanteter Ventilkeil angesetzt wird. Das führt zu Montagefehlern oder Beschädigungen an den Ventilkeilen bzw. am Ventilschaft. Damit sind die bekannten Montagegeräte für eine automatische Ventilkeilmontage nicht geeignet.

Aufgabe der Erfindung ist es, die bekannten Montagegeräte dahingehend zu verbessern, daß eine weitgehend automatisierte Montage möglich ist.

Zur Lösung dieser Aufgabe wird das eingangs genannte Montagegerät durch die im Kennzeichen des Anspruchs 1 angegebenen Merkmale weitergebildet. Demnach wird bei der Erfindung nicht mehr das gesamte Magazin auf dem Ventilschaft aufgesetzt ; vielmehr erfolgt das Ansetzen der Ventilkeile am oberen Ende des Ventilschaftes in einer versetzten, normalerweise tieferen Ebene, d. h. im Abstand zu dem Ventilkeil-Magazin. Zu diesem Zweck werden die Ventilkeilhälften durch Greifarme, die vorzugsweise mit Saugluft arbeiten, von der Austrittsöffnung des Magazins abgenommen. Die Ventilkeilhälften werden dann an den Greifarmen durch das von der Saugluft aufgebaute Vakuum gehalten. Die Greifarme transportieren anschließend die anzusetzenden Ventilkeile in die Montageposition und setzen sie an den Ventilschaft an.

Weiterhin wird das korrekte Ansetzen der Ventilkeile überwacht. Hierzu wird in besonders einfacher Weise der Abstand der Ventilkeile dadurch gemessen, daß der wechselseitige Abstand der Greifarme ermittelt wird. Liegt dieser Abstand innerhalb vorgegebener Grenzen, so sind die Ventilkeile korrekt angesetzt. Ist dies nicht der Fall, so liegt ein Fehler vor, bei dem der Montagevorgang abgebrochen wird.

Des weiteren wird vorgeschlage, während des Transportes das Vakuum zu überwachen, um festzustellen, ob ein Ventilkeil ergriffen wurde und/oder ob dieser richtig ausgerichtet ist. Ist der Ventilkeil nämlich verkantet, so baut sich kein ausreichendes Vakuum auf. Im Falle eines solchen Fehlers wird der Montagevorgang — wie bei nicht korrektem Abstand der Ventilkeile — abgebrochen. Dann wird von Saugluft auf Druckluft umgeschaltet zum Absetzen eventuell falsch ergriffener Ventilkeile und ein neuer Montagevorgang eingeleitet.

Weitere vorteilhafte Ausgestaltungen und Weiterbildungen der Erfindung sind den übrigen Unteransprüchen zu entnehmen.

Im folgenden wird die Erfindung anhand eines Ausführungsbeispiels im Zusammenhang mit der Zeichnung ausführlicher erläutert. Es zeigt :

Fig. 1 eine schematische, teilweise abgeschnittene perspektivische Ansicht wesentlicher Bauteile des Montagegerätes nach der Erfindung ;

Fig. 2 eine Schnittansicht wesentlicher Teile des Montagegerätes beim Zuführen der Ventilkeile ;

Fig. 3 eine Schnittansicht ähnlich Fig. 2, im Betriebszustand des Messens und Montierens ;

Fig. 4 eine ähnliche Schnittansicht im Betriebszustand des Setzens der Ventilkeile ;

Fig. 5 eine ähnliche Schnittansicht nach Beendigung eines Montagezyklus ; und

Fig. 6 eine Schnittansicht des Montagegerätes mit Ventilkeil-Magazin.

Gleiche Bezugszeichen in den einzelnen Figuren bezeichnen gleiche bzw. einander entsprechende Teile.

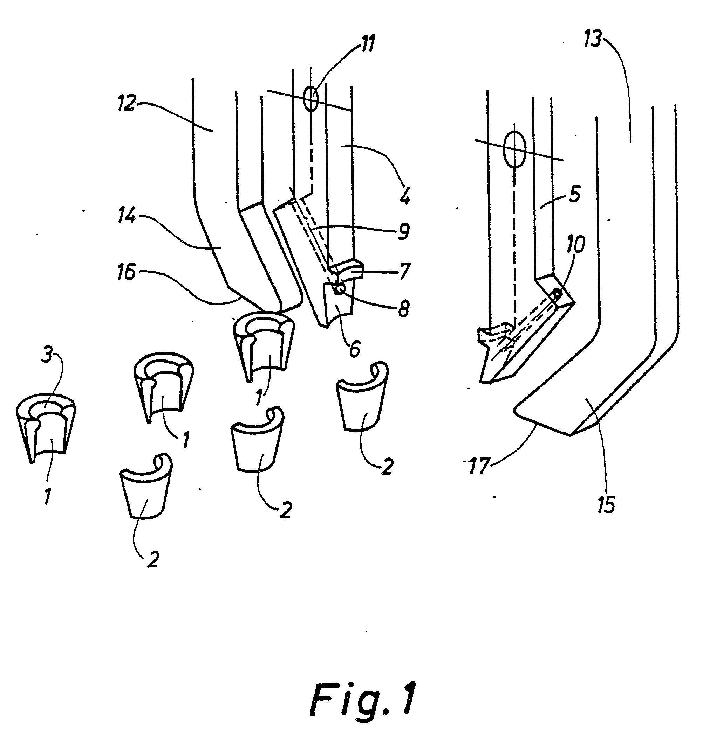

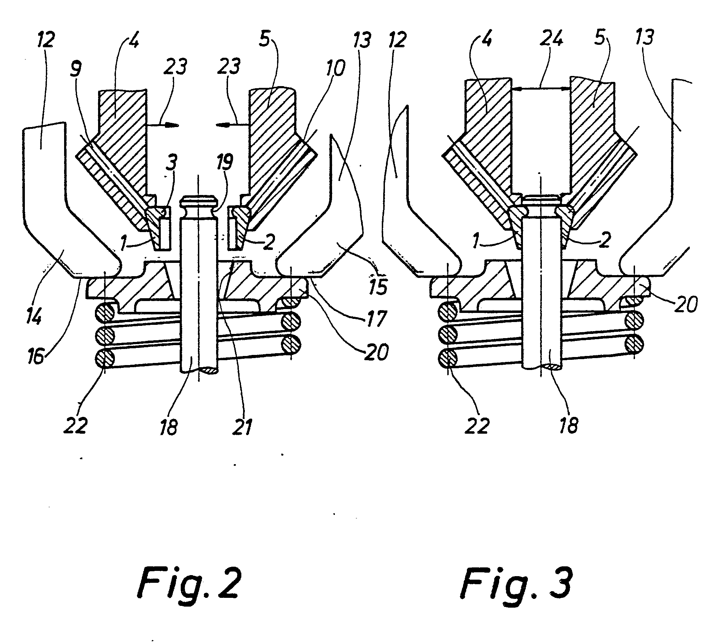

Fig. 1 zeigt schematisch, wie Ventilkeile 1 und 2 paarweise positoniert aufgereiht sind, wobei diese Ventilkeile 1, 2 eine zylindrische Innenwandung mit an ihrer Oberseite nach innen vorspringendem Wulst 3 aufweisen und an ihrer Außenseite nach unten konisch spitz zulaufen. Eine Greifeinrichtung besitzt zwei einander gegenüberliegend angeordnete Greifarme 4 und 5. An ihrer Unterseite besitzen die Greifarme 4 und 5 je eine Greiffläche 6, die der Außenkontur der Ventilkeile 1 bzw. 2 angepaßt ist. Die Greiffläche 6 wird nach oben durch einen vorspringenden Anschlag 7 begrenzt, der als axialer Anschlag für die Ausrichtung der Ventilkeile 1, 2 sorgt. In die jeweilige Führungsfläche 6 mündet eine Saugöffnung 8, welche an eine Saugbohrung 9 anschließt. Die Saugbohrung 9 ist über einen Anschluß 10 mit Vakuum beaufschlagbar und ggf. auch umschaltbar mit Preßluft. Die Greifarme 4 und 5 sind in Lagern 11 gelagert und können zum einen geradlinig parallel zur Mittelachse der Ventilkeile 1, 2 verschoben werden und andererseits geradlinig aufeinander zu bewegt werden (vgl. Pfeile 23 in Fig. 2).

In Fig. 1 liegen parallel zu den Greifarmen 4 und 5 zwei Niederhalter 12 und 13, die hier als Arme ausgebildet sind und an ihrem unteren Ende je einen Schenkel 14 bzw. 15 aufweisen, wobei diese Schenkel 14, 15 aufeinander zu gerichtet sind. Die Unterseite dieser Schenkel 14 bzw. 15 besitzt je eine Druckfläche 16 bzw. 17. Die Niederhalter 12 und 13 sind gemeinsam vertikal, d. h. parallel zur Mittelachse der Ventilkeile 1 bzw. 2 verschiebbar, und zwar unabhängig von der Verschiebung der Greifarme 4 bzw. 5.

Die positonierten Ventilkeile 1, 2 werden nun den Greifarmen 4 bzw. 5 zugeführt, wobei natürlich auch umgekehrt die Greifarme 4, 5 zu den ausgerichteten Ventilkeilen 1, 2 bewegt werden können. In der Entnahmeposition wird nun ein Ventilkeilpaar 1, 2 von den Greifarmen 4 und 5 ergriffen, was durch das Vakuum an der Saugöffnung 8 erfolgt. Durch das Vakuum werden die Ventilkeile 1, 2 dann auch an den Greifarmen 4, 5 festgehalten. Sodann entnehmen die Greifarme 4, 5 die Ventilkeile 1, 2 aus der Entnahmeposition und transportieren sie in die Montageposition.

Der Montagevorgang wird nun im Zusammenhang mit den Fig. 2 bis 5 beschrieben.

Ein Ventilschaft 18 besitzt in bekannter Weise an seinem oberen Ende eine oder mehrere Rillen 19, in welche der Wulst 3 der Ventilkeile 1 bzw. 2 formschlüssig eingreift. Der Ventilschaft 18 ragt durch einen Federteller 20 hindurch, und zwar durch eine nach oben sich konisch erweiternde Öffnung 21, die an die Außenkontur der Ventilkeile 1, 2 angepaßt ist. Der Federteller 20 wird durch eine Feder 22, die im wesentlichen koaxial zu dem Ventilschaft 18 liegt, nach oben in Richtung zum Ende des Ventilschaftes 18 gedrückt.

Aus einer Ausgangsstellung werden nun die Greifarme 4, 5 mit Ventilkeilen 1, 2 sowie die Niederhalter 12 und 13 parallel zur Mittelachse des Ventilschaftes 18 nach unten bewegt. Die Druckflächen 16 und 17 kommen bei dieser Bewegung mit dem Ventilteller 20 in Berührung und bewegen diesen entgegen der Kraft der Feder 22 nach unten, so daß das Ende des Ventilschaftes 18 aus dem Federteller 20 herausragt. Diese Bewegung wird beendet, sobald die Greifarme 4 und 5 und damit die Ventilkeile 1 und 2 gegenüber dem Ventilschaft 18 ausgerichtet sind. Mit anderen Worten liegt bei korrekter Ausrichtung der Wulst 3 genau gegenüber der Rille 19.

Die Greifarme 4 und 5 werden daraufhin in Richtung der Pfeile 23 aufeinander zu bewegt, bis die Ventilkeile 1 und 2 an dem Ventilschaft 18 angelegt sind, wie in Fig. 3 dargestellt.

In dieser Stellung wird nun der wechselseitige Abstand der Arme 4 und 5, der durch das Maß 24 angedeutet ist, überprüft. Liegt dieses Maß nicht innerhalb vorgegebener Grenzwerte, so bedeutet dies, daß ein Fehler vorliegt. Sind beispielsweise die Ventilkeile 1, 2 mit ihrem Wulst 3 nicht in die Rille 19 eingelegt, so ist der wechselseitige Abstand der Arme 4 und 5 zu groß. Ist dagegen an einem oder beiden Greifarmen 4 oder 5 kein Ventilkeil 1 bzw. 2 vorhanden, so ist das Maß 24 zu klein.

Der letztgenannte Zustand kann bereits in den Betriebspositionen gemäß Fig. 1 oder 2 dadurch überprüft und festgestellt werden, daß trotz eingeschalteter Vakuumquelle sich kein ausreichender Unterdruck in der Saugbohrung 9 bildet.

Wird das vorgegebene Maß 24 nicht erreicht oder das Vakuum durch Fehlen oder Falschsitzen eines Ventilkeiles 1, 2 nicht aufgebaut, so gehen die Greifarme 4 bzw. 5 in Störposition. Eventuell ergriffene Keile 1, 2 werden abgeworfen, indem das Vakuum abgeschaltet und ggf. sogar Preßluft aufgeschaltet wird. Der Montagevorgang beginnt dann von neuem.

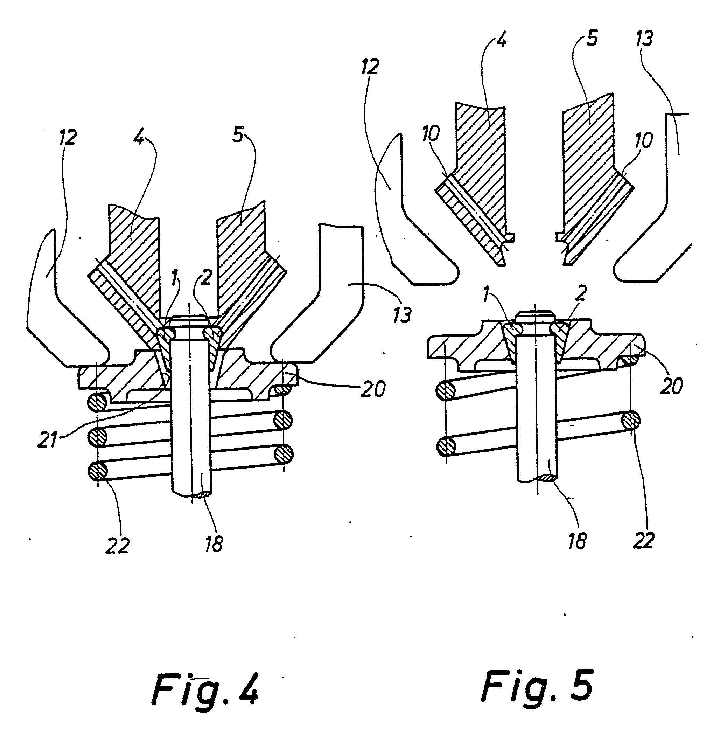

Ist dagegen das Maß 24 korrekt und auch ein vorgegebenes Vakuum erreicht, so werden gemäß Fig. 4 die Niederhalter 12 und 13 nach oben bewegt. Der Federteller 20 wird durch die Feder 22 nach oben gedrückt, so daß die konische Ausnehmung 21 die Ventilkeile 1 bzw. 2 überlappt. Die Ventilkeile 1, 2 können dann aus den Rillen 19 des Ventilschaftes 18 nicht mehr herausgleiten. Durch den Federteller 20 werden dann die Greifarme 4 und 5 nach oben geschoben. Zusätzlich kann durch die Saugbohrung 9 dann Druckluft aufgebracht werden, um ein einwandfreies Anlegen der Ventilkeile 1, 2 zu gewährleisten. Sodann werden die Greifarme 4, 5 sowie die Niederhalter 12, 13 weiter nach oben bewegt, wie in Fig. 5 dargestellt. Der Montagevorgang ist damit beendet und ein neues Ventilkeilpaar wird aus der Entnahmeposition entnommen.

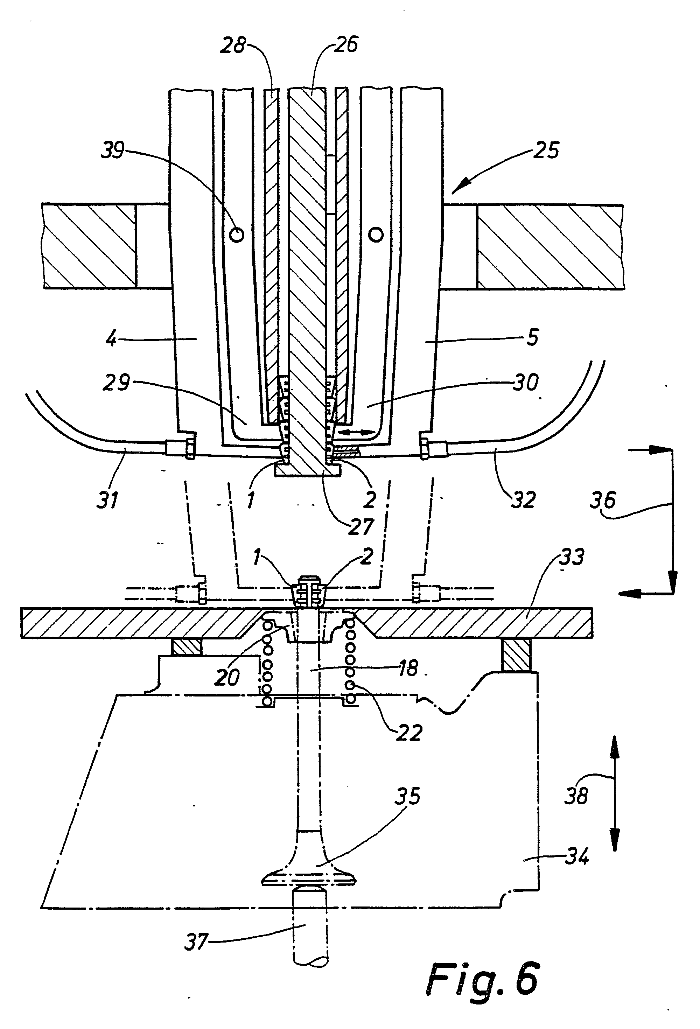

Fig. 6 zeigt detaillierter das Montagegerät im Zusammenwirken mit einem Magazin 25 für die Ventilkeile 1, 2. Das Magazin 25 besitzt ein vertikal angeordnetes Zentrierstück 26, das an seinem unteren Ende einen Bund 27 aufweist. Dieses Zentrierstück 26 ist innerhalb eines Rohres 28 angeordnet, wobei die Ventilkeile 1 und 2 in dem Zwischenraum zwischen dem Zentrierstück 26 und dem Rohr 28 paarweise übereinander angeordnet sind und durch Schwerkraft nach unten fallen, wobei das jeweils unterste Ventilkeilpaar 1, 2 von dem Bund 27 gehalten wird. Das untere Ende des Rohres 28 befindet sich in Axialrichtung im Abstand zu der Oberkante des Bundes 27, wobei dieser Abstand hier in etwa der axialen Länge von zwei hintereinanderliegenden Ventilkeilen 1, 2 entspricht. Im dargestellten Ausführungsbeispiel ist der Durchmesser des Zentrierstückes 26 größer als der Durchmesser des Ventilschaftes 18, so daß die Ventilkeile 1 und 2 eines Ventilkeilpaares — ähnlich wie in Fig. 1. — im Abstand zueinander liegen. Hierdurch wird auch eine exakte Relativstellung der Ventilkeilhälften 1 und 2 gewährleistet. Das untere Ende des Magazins 25 kann zur Freigabe von zwei Ventilkeilhälften 1 und 2 geöffnet und danach wieder geschlossen werden. Hierfür sind zwei Zangenarme 29 und 30 vorgesehen, deren untere abgewinkelte Enden in Schließstellung das Austrittsende des Magazins 25 dadurch absperren, daß sie die in der zweiten Position von unten liegenden Ventilkeile 1, 2 halten. Die in der ersten bzw. untersten Position liegenden Ventilkeilhälften werden an ihrem unteren Ende durch den Bund 27 gehalten und seitlich durch die abgewinkelten Enden der Greifarme 4 und 5.

In dem Ausführungsbeispiel der Fig. 6 ist das Magazin 25 axial gegenüber dem Ventilschaft 18 ausgerichtet. Aus der in Fig. 6 dargestellten Stellung beginnt der Montagevorgang durch Aufschalten des Unterdrucks, der über Leitungen 31 und 32 den Saugöffnungen 8 zugeführt wird, wodurch die in der ersten bzw. untersten Position liegenden Ventilkeile 1 und 2 von den Greifarmen 4 und 5 ergriffen werden. Daraufhin werden die Greifarme 4, 5 horizontal auseinanderbewegt, dann nach unten und schließlich aufeinander zu, wie durch die Pfeilfolge 36 angedeutet.

Das Niederhalten des Federtellers 20 erfolgt hier mittels eines Niederhalters 33, der als Platte mit mittiger Ausnehmung ausgebildet ist. Dieser Niederhalter 33 wird relativ zu einem Gehäuse 34 bewegt (beispielsweise dadurch, daß das Gehäuse 34 in Richtung des Pfeiles 38 nach oben bewegt wird), wodurch der Ventilschaft 18 aus dem Federteller 20 herausragt. Hierbei wird der Ventilteller 35 an einem Stößel 37 abgestützt, so daß der Ventilkörper 18, 35 stationär bleibt.

Nach Beendigung des Montagevorganges werden die Greifarme 4 und 5 entgegen der Richtung der Pfeile 36 wieder nach oben gefahren. Die Zangenarme 29 und 30 geben durch Schwenkung um Schwenkpunkte 39 das Magazin 25 frei, so daß die aufgereihten Ventilkeilpaare um eine Position nach unten rutschen. Darauf schließen die Zangenarme 29 und 30 wieder, und nach Rück- und Relativbewegung zwischen Niederhalter 33 und Gehäuse 34 beginnt ein neuer Montagevorgang.

Sämtliche in den Patentansprüchen, der Beschreibung und der Zeichnung dargestellten technischen Einzelheiten können sowohl für sich als auch in beliebiger Kombination miteinander erfindungswesentlich sein.

**Patentansprüche**

1. Montagegerät zum Einsetzen von geteilten, vorzugsweise zweigeteilten, Ventilkeilen (1, 2) in einen Federteller (20) eines Ventils unter formschlüssiger Anlage an einen Ventilschaft (18), mit einem Speicherorgan (Magazin 25), durch das die Ventilkeile (1, 2) in eine Ausgangsposition bringbar sind, Ansetzorganen, die die Ventilkeile (1, 2) aus der Ausgangsposition in die Ansetzposition zum Andrücken an den Ventilschaft (18) bringen, und Druckorganen, die zum Ansetzen der Ventilkeile (1, 2) den Federteller (20) axial am Ventilschaft (18) herunterdrücken, dadurch gekennzeichnet, daß das Speicherorgan als ein Magazin (25) ausgebildet ist, das über ein Zentrierstück (26) mit einem am unteren Ende angeordneten Anschlag (Bund 27) für die Ventilkeile (1, 2) und über ein das Zentrierstück (26) teilweise umgebendes Rohr (28) verfügt, daß die Anschlagorgane als am Außenumfang des Magazins (25) angeordnete, parallel zur Mittelachse des Ventilschafts und gegensinnig auf die Mittelachse zu bzw. von derselben weg bewegbare Greifarme (4, 5) ausgebildet sind, auf denen die Ventilkeile (1, 2) nach der Entnahme aus dem Magazin (25) mittels Saugluft arretierbar sind zur Überführung in die Ansetzposition am Ventilschaft (18), und daß Meßeinrichtungen den wechselseitigen Abstand (24) der angesetzten Ventilkeile (1, 2) erfassen und ein Fehlersignal erzeugen, wenn dieser Abstand (24) außerhalb vorgegebener Grenzwerte liegt.

2. Montagegerät nach Anspruch 1, dadurch gekennzeichnet, daß zwischen den Greifarmen (4, 5) und dem Rohr (28) des Magazins (25) Zangenarme (29, 30) angeordnet sind, deren abgewinkelte Enden in den Zwischenraum zwischem dem Bund (27) und dem unteren Ende des Rohres (28) hineinragen und in Kontakt mit den zweituntersten Ventilkeilen (1, 2) das Austrittsende des Magazins (25) verschließen.

3. Montagegerät nach Anspruch 1 und 2, dadurch gekennzeichnet, daß das Druckorgan über mindestens einen Niederhalter (12, 13 ; 33) verfügt, der parallel zur Mittelachse des Ventilschafts (18) verschiebbar ist.

4. Montagegerät nach Anspruch 1 sowie einem oder mehreren der weiteren Ansprüche, gekennzeichnet durch eine Überwachungseinrichtung, die das von der Saugluft erzeugte Vakuum an den Greifarmen (4, 5) überwacht und ein Fehlersignal erzeugt, wenn während der Transportbewegung der Greifarme (4, 5) und/oder beim Ansetzen der Ventilkeile (1, 2) an den Ventilschaft (18) das Vakuum außerhalb vorgegebener Grenzwerte liegt.

**Claims**

1. Assembly appliance for inserting divided, preferably bisected valve-spring cotters (1, 2) in a valve-spring retainer (20) of a valve with positive abutment against a valve shaft (18), with a storage member (magazine 25), by which the valve-spring cotters (1, 2) can be brought into an initial position, attachment members, which bring the valve-spring cotters (1, 2) from the initial position into the attachment position for pressing against the valve shaft (18), and pressing members, which for the attachment of the valve-spring cotters (1, 2) press down the valve-spring retainer (20) axially on the valve shaft (18), characterised in that the storage member is constructed as a magazine (25), which is provided with a centering member (26) with a stop (collar 27) located at the lower end for the valve-spring cotters (1, 2) and with a tube (28) partly surrounding the centering member (26), and that the stop members are constructed as gripping arms (4, 5) arranged on the outer periphery of the magazine (25), able to move parallel to the central axis of the valve shaft and in opposite directions towards or away from the central axis, on which arms the valve-spring cotters (1, 2), after removal from the magazine (25), can be kept stationary by means of intake air for transfer to the attachment position on the valve shaft (18) and that measuring devices determine the mutual spacing (24) of the attached valve-spring cotters (1, 2) and produce a fault signal if this spacing (24) lies outside predetermined limit values.

2. Assembly appliance according to Claim 1, characterised in that located between the gripping arms (4, 5) and the tube (28) of the magazine (25) are tong arms (29, 30), whereof the bent ends project into the clearance between the collar (27) and the lower end of the tube (28) and in contact with the next-to-the-bottom valve-spring cotters (1, 2) close off the outlet end of the magazine (25).

3. Assembly appliance according to Claims 1 and 2, characterised in that the pressing member is provided with at least one holding-down member (12, 13 ; 33), which is able to be moved parallel to the central axis of the valve shaft (18).

4. Assembly appliance according to Claim 1 and one or more of the other Claims, characterised by a monitoring device, which monitors the vacuum produced by the intake air at the gripping arms (4, 5) and produces a fault signal, if during the conveying movement of the gripping arms (4, 5) and/or during the attachment of the valve-spring cotters (1, 2) to the valve shaft (18), the vacuum lies outside predetermined limit values.

**Revendications**

1. Appareil de montage pour mettre en place des clavettes de soupape (1, 2) divisées, de préférence en deux parties, dans une cuvette de ressort (20) d'une soupape avec application, par conjugaison de formes, contre une tige de soupape (18), comportant un organe de stockage (magasin 25), par lequel les clavettes de soupape (1, 2) peuvent être amenées dans une position de sortie, des organes de mise en place, qui transfèrent les clavettes de soupape (1, 2) de la position de sortie jusque dans la position de mise en place en vue d'une application contre la tige de soupape (18), et des organes de pression qui, en vue de la mise en place des clavettes de soupape (1, 2), poussent vers le bas la cuvette de ressort (20) axialement contre la tige de soupape (18), caractérisé en ce que l'organe de stockage est agencé sous la forme d'un magasin (25), qui est pourvu d'une pièce de centrage (26), comportant une butée (collet 27) pour les clavettes (1, 2) qui est disposée à l'extrémité inférieure, et d'un tube (28) entourant partiellement la pièce de centrage (26), en ce que les organes de butée sont agencés sous la forme de bras de prise (4, 5) disposés sur la périphérie extérieure du magasin (25), déplaçables parallèlement à l'axe central de la tige de soupape et, en sens inverse, en rapprochement de l'axe central ou en éloignement de celui-ci, et sur lesquels les clavettes de soupape (1, 2) peuvent être arrêtées, après l'extraction hors du magasin (25), au moyen d'air d'aspiration en vue de leur transfert dans la position de mise en place sur la tige de soupape (18), et en ce que des dispositifs de mesure déterminent l'espacement mutuel (24) des clavettes de soupape (1, 2) mises en place et produisent un signal d'erreur lorsque cet espacement (24) sort de limites prédéterminées.

2. Appareil de montage selon la revendication 1, caractérisé en ce qu'il est prévu entre les bras de prise (4, 5) et le tube (28) du magasin (25) des branches de pince (29, 30) dont les extrémités recourbées pénètrent dans le volume intermédiaire existant entre le collet (27) et l'extrémité inférieure du tube (28) et entrent en contact avec les clavettes de soupape (1, 2) placées dans l'avant-dernière position inférieure pour obturer l'extrémité de sortie du magasin (25).

3. Appareil de montage selon une des revendications 1 et 2, caractérisé en ce que l'organe de pression comporte au moins un contre-appui (12, 13 ; 33), qui est déplaçable parallèlement à l'axe central de la tige de soupape (18).

4. Appareil de montage selon la revendication 1 ainsi que selon une ou plusieurs des autres revendications, caractérisé par un dispositif de contrôle, qui contrôle le vide produit par l'air d'aspiration sur les bras de prise (4, 5) et qui produit un signal d'erreur lorsque, pendant le mouvement de transfert des bras de prise (4, 5) et/ou lors de la mise en place des clavettes de soupape (1, 2) sur la tige de soupape (18), le vide est situé en dehors de limites prédéterminées.

**Fig.1**

Fig. 2

Fig. 3

Fig. 4

Fig. 5

**Fig. 6**